# EUROPEAN PATENT APPLICATION

(11) **EP 3 686 104 A1**
(43) Date of publication of application: **29.07.2020**
(21) Application number: 20150470.1
(22) Date of filing: 07.01.2020
(51) Int. Cl.: B64C 1/40

(54) **ACOUSTIC BARRIER ASSEMBLY AND METHOD OF MANUFACTURING A VEHICLE USING AN ACOUSTIC BARRIER ASSEMBLY**

(30) Priority: 22.01.2019 US 201916254233
(71) Applicant: Gulfstream Aerospace Corporation, Savannah, Georgia 31402 (US)
(72) Inventor: YOVICH, Nicholas, Savannah, GEORGIA 31402 (US); LUCAS, Mike, Savannah, GEORGIA 31402 (US); SIMONS, Emerald, Savannah, GEORGIA 31402 (US)
(74) Representative: LKGlobal UK Ltd.

(57) **Abstract**

An acoustic barrier assembly including a first wall (42) composed of a first material. The first material is substantially gas impermeable. The assembly further includes a second wall (44) composed of a second material. The second material is substantially gas impermeable. The second wall (44) is disposed opposite the first wall (42) and coupled to the first wall (42) in a manner that forms a pocket (52) between the first wall (42) and the second wall (44).The assembly further includes a valve (56) in fluid communication with the pocket (52). The valve (56) is configured to be selectively opened and closed to control the passage of fluid into and out of the pocket (52). The valve (56), when closed, cooperates with the first wall (42) and the second wall (44) maintain the pocket (52) in a fluid-tight configuration. The assembly still further includes a gas disposed in the pocket (52). The gas has a molecular weight that is lower than the molecular weight of air.

## Description

### TECHNICAL FIELD

The present invention relates generally to inhibiting the transmission of sound, and more particularly relates to an acoustic barrier assembly and a method of manufacturing an aircraft using an acoustic barrier assembly.

### BACKGROUND

It is desirable to obstruct and/or impede the transmission of sound from one location to another onboard a vehicle. For example, it is desirable to inhibit the sounds of the freestream air flowing over an exterior portion of an aircraft from entering the cabin of the aircraft. In another example, it is desirable to prevent sounds in one compartment of an aircraft from passing through a bulkhead and/or a door and entering into another compartment of the aircraft.

One solution entails the positioning of a mass between compartments or between adjacent locations to provide sound insulation. This approach is currently employed in many aircraft applications. A sheet of insulating material such as sound absorbing foam or fiber batting, and/or a limp mass barrier blanket placed in cavities inside of bulkheads and doors, for example. A drawback of using a mass to absorb/inhibit the transmission of sound is that, in some applications, in order to obtain desirable levels of sound insulation, substantial amounts of mass must be used. This is undesirable in vehicle applications because increasing the mass of the vehicle can adversely impact the performance of the vehicle.

Another solution entails separating compartments or adjacent locations with a double walled barrier. The double wall barrier includes two masses (e.g., two walls) that are separated by a cavity filled with air. This solution is generally superior to the mass solution stated above, but the presence of air in the cavity acts as a medium for the transmission of sound between the two masses. Accordingly, this solution still permits more sound to pass from one location to another than is desired.

Another solution entails separating compartments or adjacent locations with a double wall barrier having a cavity disposed between the two walls and a vacuum within the cavity. This solution is superior to the double walled solution discussed above because the absence of any matter between the two walls inhibits the transmission of any sound energy from one wall to the other. However, the long-term maintenance of a vacuum poses a challenge. When the vacuum fails, this solution provides no greater sound isolation than the solution discussed above. Furthermore, in order to maintain a vacuum between the two walls, a rigid, robust structure must be employed to support the two walls in a spaced apart relationship. The rigidity of the structure may substantially limit the locations where it may be employed. Additionally, because of the strength and robust nature of the materials used in the support frame that connects the two walls, the frame itself may transmit vibration from the acoustically or vibrationally excited source wall to the receiver wall that will then radiate sound to the receiver space. The rigid structure connecting the two walls can become a vibration flanking path.

Accordingly, it is desirable to provide an acoustic barrier assembly that addresses the concerns expressed above. It is also desirable to provide a method of manufacturing an aircraft using an acoustic barrier assembly that addresses the concerns expressed above. Furthermore, other desirable features and characteristics will become apparent from the subsequent summary and detailed description and the appended claims, taken in conjunction with the accompanying drawings and the foregoing technical field and background.

### BRIEF SUMMARY

Various embodiments of an acoustic barrier assembly and various embodiments of a method of manufacturing a vehicle using an acoustic barrier assembly are disclosed herein.

In a first non-limiting embodiment, the acoustic barrier assembly includes, but is not limited to, a first wall comprising a first material. The first material is substantially gas impermeable. The acoustic barrier further includes, but is not limited to, a second wall comprising a second material. The second material is substantially gas impermeable. The second wall is disposed opposite the first wall. The second wall is coupled with the first wall in a manner that forms a pocket between the first wall and the second wall. The acoustic barrier assembly further includes, but is not limited to, a valve in fluid communication with the pocket. The valve is configured to be selectively opened and closed to control the passage of fluid into and out of the pocket. The valve, when closed, cooperates with the first wall and the second wall to maintain the pocket in a fluid-tight configuration. The acoustic barrier assembly still further includes, but is not limited to, a gas disposed in the pocket. The gas has a first molecular weight that is lower than a second molecular weight of air.

In another non-limiting embodiment, the acoustic barrier assembly includes, but is not limited to, a first wall comprising a first material. The first material is substantially gas impermeable. The acoustic barrier assembly further includes, but is not limited to, a second wall comprising a second material. The second material is substantially gas impermeable. The second wall is disposed opposite the first wall. The second wall is coupled with the first wall in a manner that forms a pocket between the first wall and the second wall. The acoustic barrier assembly further includes, but is not limited to, a body disposed in the pocket. The acoustic barrier assembly still further includes, but is not limited to, a gas disposed in the pocket. The gas has a first molecular weight lower than a second molecular weight of air.

In another non-limiting embodiment, the method includes, but is not limited to, obtaining an acoustic barrier assembly. The acoustic barrier assembly has a first wall and a second wall coupled together to form a pocket. The pocket is fluid-tight. The pocket contains a gas having a first molecular weight lower than a second molecular weight of air. The method further includes, but is not limited to, placing the acoustic barrier assembly in a position between two bodies. The method still further includes, but is not limited to, affixing the acoustic barrier assembly in the position.

### BRIEF DESCRIPTION OF THE DRAWINGS

The present invention will hereinafter be described in conjunction with the following drawing figures, wherein like numerals denote like elements, and
FIG. 1 is a fragmentary schematic cross-sectional view of an aircraft suitable for use with embodiments of an acoustic barrier assembly of the present disclosure;
FIG. 2 is a schematic fragmentary cross-sectional view of an exemplary dividing structure (such as a wall, floor, door, fuselage, etc.) of the aircraft of FIG. 1 suitable for housing the acoustic barrier assembly of the present disclosure;
FIG. 3 is a perspective view illustrating a non-limiting embodiment of the acoustic barrier assembly of the present disclosure;
FIG. 4A is a schematic cross-sectional view of a non-limiting embodiment of an acoustic barrier assembly of the present disclosure;
FIGS. 4B-C are schematic cross-sectional views of alternate embodiments of the acoustic barrier assembly illustrated in FIG. 4A;
FIG. 5 is a schematic cross-sectional view of an alternate, non-limiting embodiment of an acoustic barrier assembly of the present disclosure;
FIG. 6A-D are schematic cross-sectional views illustrating alternate configurations of the acoustic barrier assembly of FIG. 5;
FIG. 7 is a top view of the acoustic barrier assembly of FIG. 5; and
FIG. 8 is a flow diagram illustrating a non-limiting embodiment of a method of manufacturing a vehicle in accordance with the teachings disclosed herein.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

An improved acoustic barrier assembly is disclosed herein that addresses the issues identified above in the Background section. In a non-limiting embodiment, the acoustic barrier assembly comprises a double wall structure that is configured to be positioned between the walls forming a bulkhead, the panels of a door, outer skin of a fuselage and cabin interior wall, and any other structure having a double wall configuration with hollow space situated therebetween. In other embodiments, the acoustic barrier assembly may be coupled with single wall structures. In still other embodiments, the acoustic barrier assembly may be employed in a stand-alone manner and need not be disposed between the two walls of a double wall structure or disposed adjacent a single wall structure.

In a non-limiting embodiment, the two walls forming the double wall structure of the acoustic barrier assembly are constructed of a gas impermeable material. In some embodiments, the gas impermeable material may be elastic while in other embodiments, the gas impermeable material may be substantially inelastic. In some embodiments, the gas impermeable material may be resistant to punctures. The two walls are positioned opposite one another and are coupled together such that a pocket is formed between the two walls. The coupling together of the two walls may be accomplished by sealing portions of the two walls to one another with an epoxy or other adhesive, by thermo-sealing (e.g., melting) the two walls together, by welding two flexible walls together, by one or more fasteners such as a clamp, by combinations of any of the foregoing, or by joining the two walls together in any other manner that yields a suitable fluid-tight seal. In an embodiment where the side walls of the acoustic barrier assembly are constructed of flexible material, the walls are inherently vibrationally isolated from one another so added vibration isolators may not be necessary. In embodiments where the side walls of the acoustic barrier assembly are constructed of rigid, inflexible material, vibration isolation between the two walls may be needed.

In a non-limiting embodiment, a valve is coupled to the double wall structure such that the valve is placed in fluid communication with an interior portion of the pocket. The valve is configured to be selectively opened and closed. When the valve is opened, a gas can be introduced into the pocket or evacuated therefrom. When the valve is closed, the two walls and side walls forming the pocket cooperate with the valve to seal the pocket in a fluid tight manner.

In a non-limiting embodiment, the pocket contains a gas having a molecular weight lower than the molecular weight of air. For ease of reference, this gas may be referred to herein as a "lightweight" gas. In an embodiment, the lightweight gas may be helium. The lightweight gas may be introduced into the pocket via the valve. In an embodiment, the pocket will be evacuated prior to the introduction of the lightweight gas. In another embodiment, the pocket may not be evacuated prior to the introduction of the lightweight gas but rather the introduction of the lightweight gas may cause the displacement of the heavier gas occupying the pocket. When the pocket is filled with the lightweight gas, the acoustic barrier assembly will have a shape that is suitable to allow the acoustic barrier to be introduced into, and maintained within, the space between the two walls of the structure that is to be insulated (e.g., a bulkhead, a door).

In other embodiments, it may be preferable to position the acoustic barrier assembly between the two walls of the structure to be insulated prior to the introduction of the lightweight gas into the pocket of the acoustic barrier assembly and to then inflate the pocket with the lightweight gas once the acoustic barrier assembly is in a desired position. This ability to inflate the acoustic barrier assembly after it is situated in the location where it is needed may make the acoustic barrier assembly of the present disclosure ideally suited for use in cavities, crevices, and other spaces that are difficult to access or that are non-uniform in their cross-sectional dimensions.

With the acoustic barrier assembly positioned between the two walls of a structure, such as a bulkhead or a fuselage cavity, and also in arrangements where the acoustic barrier assembly is employed in a stand-alone manner as the only structure disposed between locations needing to be sound insulated from one another, the acoustic barrier assembly of the present disclosure will provide superior sound mitigation than the conventional methods described above in the Background section. This is because the acoustic barrier assembly of the present disclosure employs a lightweight gas. The use of a lightweight gas such as, but not limited to, helium will substantially diminish the ability of the acoustic barrier assembly to transmit sound energy between the two walls of the acoustic barrier assembly. By virtue of their lower mass, the gas molecules of the lightweight gas will be less capable of transmitting energy. By way of analogy, an acoustic barrier assembly filled with ping pong balls will inherently be less capable of transmitting vibrations between the two walls of the acoustic barrier assembly than would an acoustic barrier assembly filled with billiard balls. This same principle applies at the molecular level.

A greater understanding of the acoustic barrier assembly discussed above and a method of manufacturing a vehicle using the acoustic barrier assembly discussed above may be obtained through a review of the illustrations accompanying this application together with a review of the detailed description that follows.

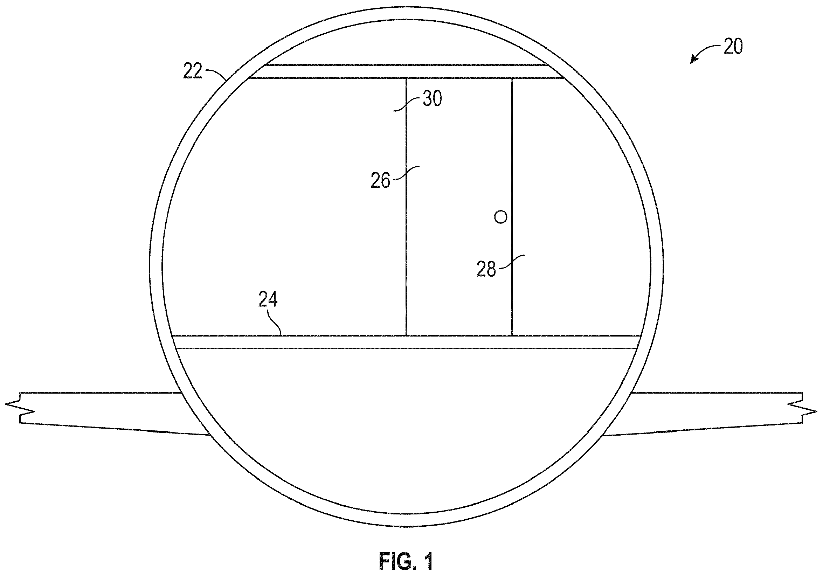

FIG. 1 is a fragmentary schematic cross-sectional view illustrating an aircraft 20. Aircraft 20 may comprise any type of aircraft including, without limitation, a subsonic aircraft, a supersonic aircraft, a propeller driven aircraft, a jet powered aircraft, a commercial airliner, a private business jet, a cargo aircraft, a military aircraft, and any other type of aircraft in which it is desirable to provide sound isolation. Additionally, although the acoustic barrier assembly of the present disclosure is being described and explained in the context of its application onboard an aircraft, it should be understood that the acoustic barrier assembly of the present disclosure is not limited to use onboard an aircraft. Rather, the acoustic barrier assembly of the present disclosure may be used in any type of vehicle including, but not limited to, automotive vehicles, surface and sub-surface watercraft, and spacecraft. Furthermore, the acoustic barrier assembly of the present disclosure is not limited to use in vehicles but may also be employed in other applications unrelated to vehicles such as, and without limitation, in the construction industry (e.g., building sound isolation into the walls of an apartment building) and in the furniture industry (e.g., building sound isolation into the partitions of office cubicles). In still other applications, the acoustic barrier assembly of the present disclosure may be employed in any industry and/or application where it is desirable to provide sound isolation.

Aircraft 20 includes a fuselage 22, a floor 24, a door 26, a bulkhead 28 and a bulkhead 30. In an exemplary embodiment, fuselage 22 separates occupants of aircraft 20 from the freestream air passing over and around aircraft 20 during flight. In an exemplary embodiment, floor 24 separates occupants of aircraft 20 from aircraft machinery such as landing gear, weapon systems, cargo, and avionics systems (not shown). In an exemplary embodiment, door 26, bulkhead 28, and bulkhead 30 cooperate to separate aircraft crew personnel from aircraft passengers. In each example given above, there is a double-walled partition that separates aircraft occupants from a source of sound (e.g., the freestream air, aircraft machinery, and other aircraft occupants, respectively).

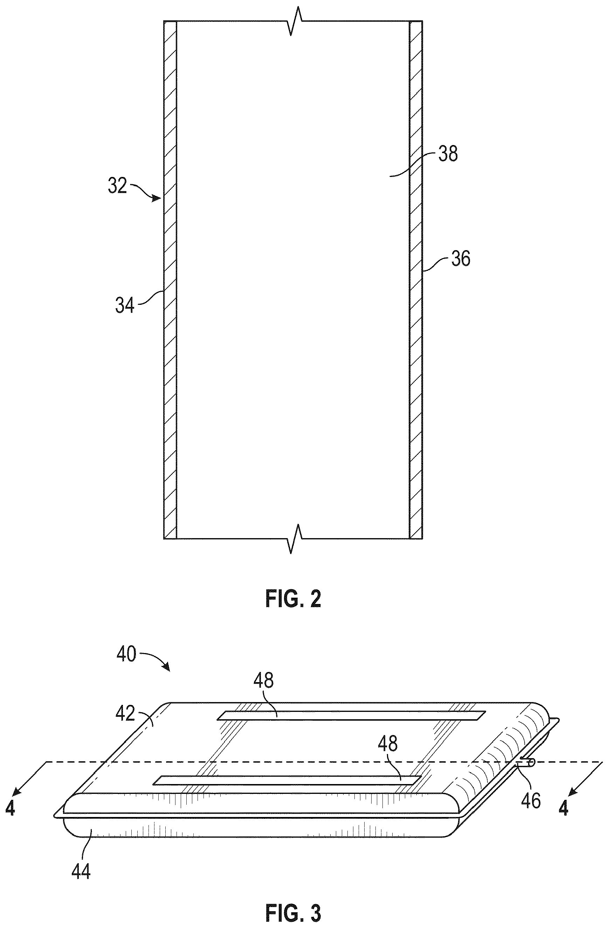

With continuing reference to FIG. 1, FIG. 2 is a fragmentary schematic cross-sectional view illustrating a partition 32. Partition 32 is an exemplary double wall constructed partition and may be suitable for use in the construction of fuselage 22, floor 24, door 26, and bulkheads 28 and 30. As illustrated, partition 32 includes a first wall 34, a second wall 36, and a cavity 38 disposed between first wall 34 and second wall 36. Cavity 38 is filled with air. If cavity 38 were to remain filled with air, then partition 32 would provide sound isolation commensurate with the level of sound isolation discussed in the Background section, above. This may be insufficient for situations that aircraft 20 is likely to encounter. Accordingly, it is desirable to position an acoustic barrier in cavity 38 to enhance the ability of partition 32 to inhibit the transmission of sound energy across partition 32.

In some embodiments, cavity 38 may have a three-dimensional rectangular configuration. Accordingly, it would be desirable to insert an acoustic barrier into cavity 38 that also has a three-dimensional rectangular configuration. In other embodiments, cavity 38 may have other three-dimensional configurations.

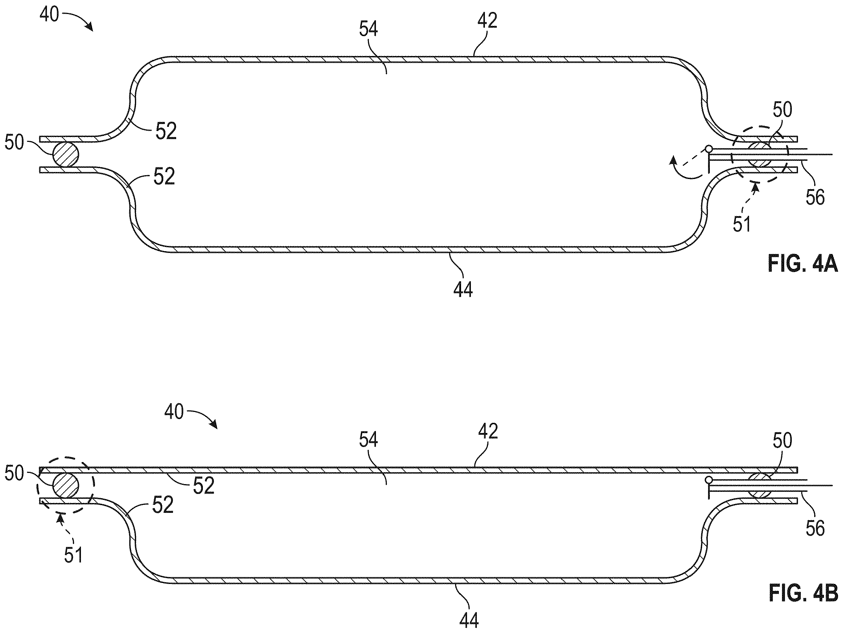

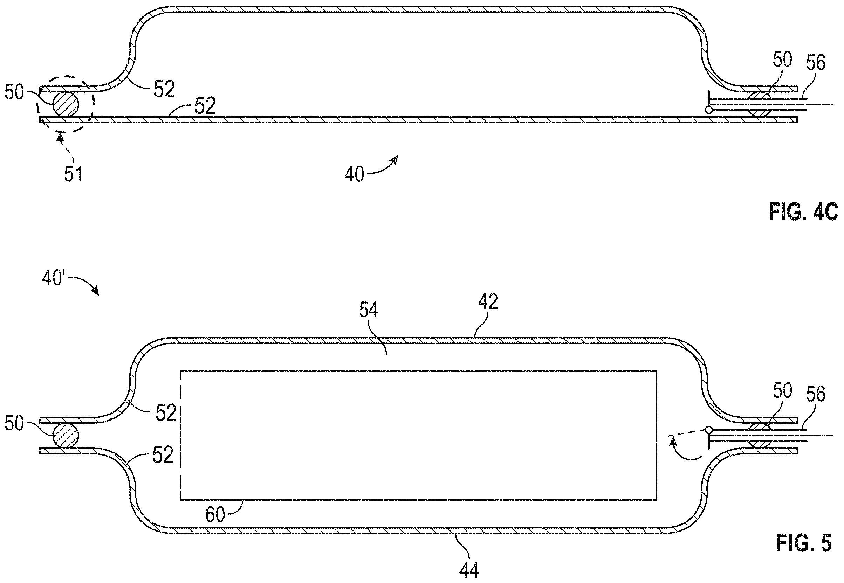

With continuing reference to FIGS. 1-2, FIG. 3 is a perspective view of a non-limiting embodiment of an acoustic barrier assembly 40. As illustrated, acoustic barrier assembly 40 has a generally three-dimensional rectangular configuration suitable for insertion into cavity 38. It should be understood that in other embodiments, acoustic barrier assembly 40 may have any other suitable shape and/or configuration that permits insertion into cavities having three-dimensional shapes other than a three-dimensional rectangular configuration. Acoustic barrier assembly 40 includes an upper wall 42 and a lower wall 44 coupled together forming a pocket therebetween (as best seen in FIGS. 4, 5, and 6A-D). A valve 46 provides fluid communication with the pocket and permits the introduction of gas into, and the extraction of gas from, the pocket. Acoustic barrier assembly 40 further includes a pair of coupling members 48 positioned along an upper surface (from the perspective of FIG. 3) of upper wall 42. In a non-limiting embodiment, pair of coupling members 48 may comprise double sided tape or a pair of hook-and-loop connectors (commonly known as Velcrotm). In other embodiments, pair of coupling members 48 may alternatively be positioned along lower wall 44 while in still other embodiments, pair of coupling members 48 may be positioned along both upper wall 42 and lower wall 44.

With continuing reference to FIGS. 1-3, FIG. 4A is a schematic cross-sectional view of acoustic barrier assembly 40 taken along the line 4-4 of FIG. 3. For the sake of simplification, not every feature of acoustic barrier assembly 40 has been included in FIG. 4A. For example, pair of coupling members 48 have been omitted.

Upper wall 42 and lower wall 44 are each comprised of a material that is gas impermeable. Suitable materials for use in the construction of upper wall 42 and lower wall 44 include (collectively referred to herein as, the "walls"), but are not limited to, mono and composite layer films such as metallized polyester films, foils, or other substrates and elastomer coatings and specialty coated membrane films. In some embodiments, it may be desirable for the walls to be fabricated from a stiff material such as metal to facilitate the insertion of acoustic barrier assembly 40 into cavity 38. In other embodiments, it may be desirable for the walls to be fabricated from a more flexible material that permits the acoustic barrier assembly to be rolled up and inserted into cavity 38 and then unrolled once in place. In a non-limiting embodiment, upper wall 42 and lower wall 44 may be constructed of the same material. In other embodiments, upper wall 42 and lower wall 44 may be constructed of different materials.

As illustrated in FIG. 4A, upper wall 42 and lower wall 44 are coupled together by a mechanical coupling means 50. The ends of upper wall 42 and lower wall 44 and mechanical coupling means 50, together, form a seam 51. In the embodiment illustrated in FIG. 4A, seam 51 is centered between walls 42 and 44. It should be understood that in other embodiments, seam 51 may be disposed elsewhere on acoustic barrier 40. For example, in FIG. 4B, seam 51 is disposed at an upper end of acoustic barrier assembly 40 while in FIG. 4C, seam 51 is disposed at a lower end of acoustic barrier assembly 40. In other embodiments, seam 51 may be disposed at any suitable location on acoustic barrier assembly 40 without departing from the teachings of the present disclosure.

Mechanical coupling means 50 may comprise a bead of adhesive applied along substantially an entire periphery of upper wall 42 and lower wall 44. In other embodiments, mechanical coupling means 50 may comprise a thermo-coupling wherein the material comprising upper wall 42 and the material comprising lower wall 44 are melted together. In other embodiments, mechanical coupling means 50 may be a joint composed of a welding material that is heat coupled to both upper wall 42 and lower wall 44. In other embodiments, mechanical coupling means 50 may comprise a clamp or a series of clamps that extend along an entire perimeter of acoustic barrier assembly. In still other embodiments, any other means, method, mechanism, and/or combination thereof for coupling upper wall 42 and lower wall 44 together in a manner that provides for a fluid-tight coupling between upper wall 42 and lower wall 44 may be employed without departing from the teachings of the present disclosure.

With continuing reference to FIG. 4A, a pocket 52 is formed by upper wall 42 and lower wall 44. Pocket 52 is configured to contain a gas. A gas 54 is disposed within pocket 52. Gas 54 has a molecular weight lower than the molecular weight of air. Air has a weight of approximately 28 grams per mole. Accordingly, gas 54 has a molecular weight of less than 28 grams per mole. In one example, gas 54 is helium, having a weight of 4 grams per mole. In other examples, gas 54 may comprise any other gas having a mass per mole of less than 28 grams per mole.

A valve 56 extends through mechanical coupling means 50 and is fluidly coupled with pocket 52. Valve 56 permits gas 54 to be introduced into, and evacuated from, pocket 52. When valve 56 is closed (as illustrated in solid lines), it cooperates with upper wall 42, lower wall 44, and mechanical coupling means 50 to provide a fluid-tight container for gas 54. When valve 56 is opened (as illustrated in hidden lines), valve 56 permits the introduction or evacuation of gas 54 into and from, respectively, pocket 52. Valve 56 permits a construction worker or a maintenance worker to adjust the amount of gas 54 in pocket 52, as needed.

The size/dimensions of pocket 52 will expand and contract depending upon a number of factors including, but not limited to, the amount of gas disposed in pocket 52, the energy level of that gas, and the ambient atmospheric pressure outside of pocket 52. Accordingly, for a given number of gas molecules contained within pocket 52, the size/dimensions of pocket 52 may enlarge as the gas warms, it may diminish as the gas cools, it may enlarge as the ambient atmospheric pressure decreases, and it may diminish as the atmospheric pressure increases. The effects of changing atmospheric pressures and changing temperatures can be additive with one another in their impact on the size/dimensions of pocket 52 or they can offset one another in the impact they have on the size/dimensions of pocket 52. Familiarity with these factors can be helpful in tailoring acoustic barrier assembly 40 to fit snugly and/or loosely (as desired) within an allotted space in cavity 38 and/or to fit snugly or loosely (as desired) within cavity 38 when aircraft 20 is operating at a design altitude. For example, if it is desired that acoustic barrier assembly 40 fit snugly in cavity 38 between first wall 34 and second wall 36, and if it is known that aircraft 20 is designed to operate at an altitude of 50,000 feet, then both the temperature and ambient atmospheric pressure that acoustic barrier assembly 40 will encounter during aircraft operations are known. With a knowledge of the volume of space available in cavity 38 and in pocket 52 and with an understanding of the behavior of gas 54 under known temperature and pressure conditions, then an amount of gas 54 can be introduced into pocket 52 that will permit acoustic barrier assembly 40 to snugly fit within cavity 38 between first wall 34 and second wall 36.

With continuing reference to FIGS. 1-4, FIG. 5 is a schematic cross-sectional view illustrating an alternate embodiment of an acoustic barrier assembly 40'. Acoustic barrier assembly 40' is substantially similar to acoustic barrier assembly 40. The primary difference between acoustic barrier assembly 40 and acoustic barrier assembly 40' is that acoustic barrier assembly 40' includes a body 60 disposed in pocket 52. Body 60 is configured to fit entirely within pocket 52 and to give acoustic barrier assembly 40' its overall shape and to retain that overall shape regardless of whether gas 54 occupies pocket 52. In some embodiments, body 60 may be comprised of sub-bodies that may be arranged in an aligned manner to form a segmented body 60. In such embodiments, each sub-body may be positioned in direct contact with each adjacent sub-body to form body 60. In other embodiments, the sub-bodies may be spaced apart from one another such that some or all of the sub-bodies avoid direct contact with their neighboring sub-bodies. In other words, pocket 52 may contain a plurality of bodies 60. The use of multiple sub-bodies or the use of a plurality of bodies 60 provides for the opportunity to use different materials having different properties in a single acoustic barrier assembly 40'. It also provides for the opportunity to position acoustic barrier assembly 40' inside of body cavities that are not planar in configuration, but which may have curvatures or bends or other non-linear spaces.

Body 60 may comprise any suitable material. In some embodiments, body 60 may comprise a sound absorbing material and thus may enhance the overall ability of acoustic barrier assembly 40' to obstruct, inhibit, and/or absorb the transmission of sound between upper wall 42 and lower wall 44. Body 60 may be comprised of any suitable material, including, but not limited to, sound absorbing foam or fiber batting, and/or a limp mass barrier blanket. Foams may comprise open cell foams or partially open cell foams. Fiber batting may comprise fiberglass batting. Body 60 may also be constructed of fibrous blanket materials. Other suitable materials may also be employed without departing from the teachings of the present disclosure.

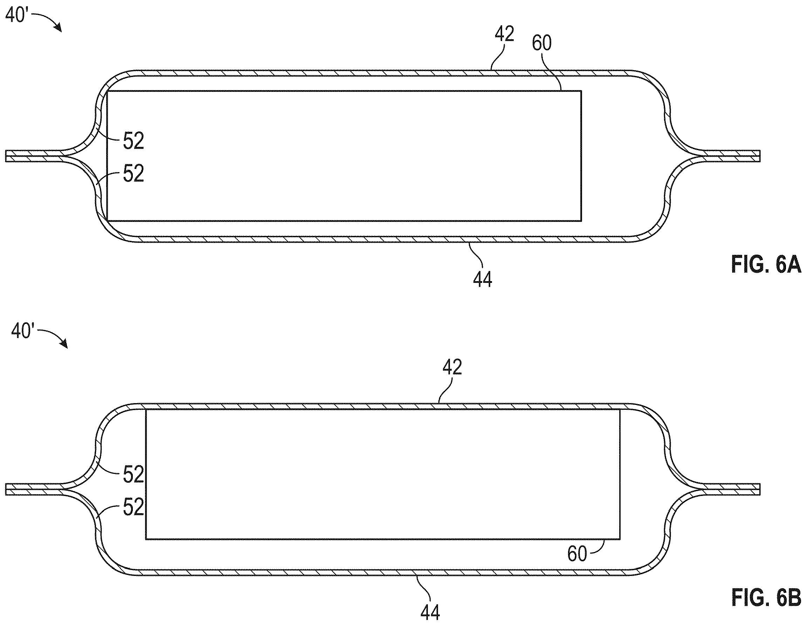

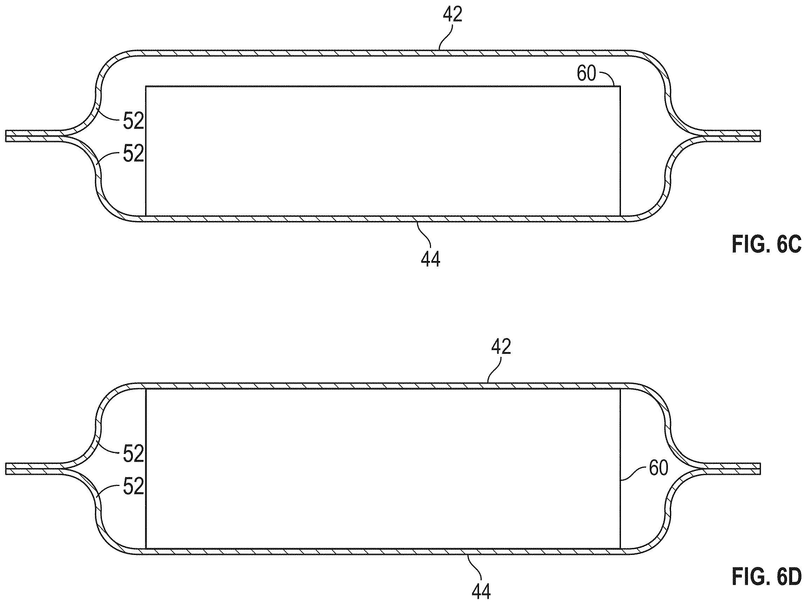

In FIG. 5, body 60 is depicted as floating freely within pocket 52, untethered to any interior surface of pocket 52. Accordingly, it should be understood that FIG. 5 illustrates a notional embodiment of acoustic barrier 40'. In practice, body 60 may be attached to one or more interior surfaces of pocket 52. Several such configurations are depicted in FIGS. 6A through 6D. In FIG. 6A, body 60 is secured to a left side portion of pocket 52 (e.g., a left side portion of upper wall 42 and lower wall 44) and is otherwise unsecured within pocket 52. In FIG. 6B, body 60 is secured to an upper surface of pocket 52 (e.g., a downward facing side of upper wall 42) and is otherwise unsecured within pocket 52. In FIG. 6C, body 60 is secured to a lower surface of pocket 52 (e.g., an upward facing side of lower wall 44) and is otherwise unsecured within pocket 52. In FIG. 6D, body 60 is secured to both an upper and lower surface of pocket 52 (e.g., to both a downward facing side of upper wall 42 and an upward facing side of lower wall 44) and is otherwise unsecured within pocket 52.

To ensure that body 60 does not contribute to the transmission of sound between upper wall 42 and lower wall 44, it is desirable for body 60 to be constructed of a compliant material. In a non-limiting example, such material may have a spring rate of no greater than two hundred pounds per inch per square inch of material. With continuing reference to FIGS. 4A-C , FIGS. 6A-D depict seam 51 disposed at a central location between upper wall 42 and lower wall 44. It should be understood that, as illustrated in FIGS. 4B and 4C, seam 51 may be disposed elsewhere on the acoustic barrier assembly.

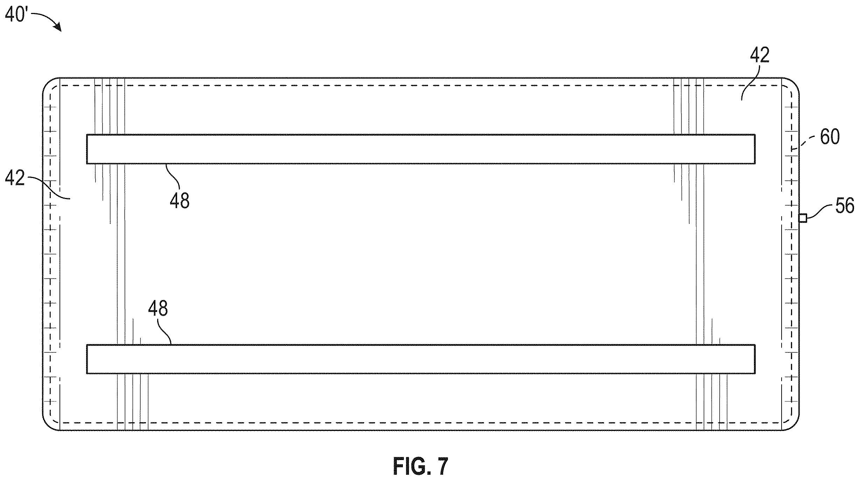

With continuing reference to FIGS. 1-6, FIG. 7 is a plan view of acoustic barrier assembly 40'. In FIG. 7, body 60 is illustrated in hidden lines. In this view, it can be seen that the overall shape and configuration of acoustic barrier assembly 40' is provided by body 60. Body 60 serves as the skeletal structure for acoustic barrier 40' while upper wall 42 and lower wall 44 serve as the skin. The structural rigidity imparted to acoustic barrier assembly 40' by body 60 permits acoustic barrier assembly 40' to be pushed into cavities.

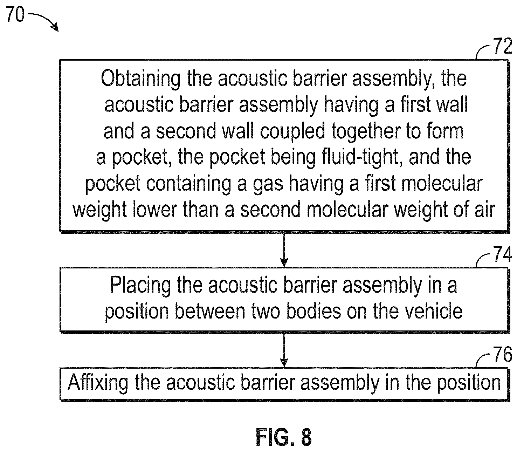

With continuing reference to FIGS. 1-7, FIG. 8 is a flow diagram illustrating the steps of a method 70 for manufacturing a vehicle with an acoustic barrier assembly. At step 72, an acoustic barrier assembly is obtained. The acoustic barrier assembly may have a first wall and a second wall coupled together to form a pocket. The pocket is fluid-tight meaning that it is configured to contain low molecular weight gas without leakage. The pocket further contains a gas. The gas has a molecular weight lighter than the molecular weight of air. In some embodiments, the acoustic barrier may comprise acoustic barrier assembly 40 or acoustic barrier assembly 40', discussed above.

At step 74, the acoustic barrier is placed between two bodies on the vehicle. The two bodies are two bodies between which it is desired to provide sound isolation. In some examples, the two bodies may comprise the two walls of a double wall constructed door or bulkhead of an aircraft. In other examples, the two bodies may comprise the outer skin of a fuselage and the inner skin of a cabin. In still other embodiments, the two bodies may comprise any other structures between which it is desirable to provide sound isolation.

At step 76, the acoustic barrier assembly is affixed between the two bodies. In some embodiments, the acoustic barrier assembly may be affixed to one of the bodies while in other embodiments, the acoustic barrier assembly may be affixed to both bodies. In some embodiments, the acoustic barrier assembly may be affixed using an adhesive, a tape, a hook-and-loop type fastener, a mechanical fastener, or any other means suitable to retain the acoustic barrier assembly in its position between the two bodies.

While at least one exemplary embodiment has been presented in the foregoing detailed description of the disclosure, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the disclosure as set forth in the appended claims.

The present disclosure may be further described by the following Aspects.
Aspect 1. An acoustic barrier assembly comprising:
   a first wall comprising a first material, the first material being substantially gas impermeable;
   a second wall comprising a second material, the second material being substantially gas impermeable, the second wall disposed opposite the first wall, the second wall coupled with the first wall in a manner that forms a pocket between the first wall and the second wall;
   a valve in fluid communication with the pocket, the valve configured to be selectively opened and closed to control a passage of fluid into and out of the pocket, the valve, when closed, cooperating with the first wall and the second wall to maintain the pocket in a fluid-tight configuration; and
   a gas disposed in the pocket, the gas having a first molecular weight lower than a second molecular weight of air.
Aspect 2. The acoustic barrier assembly of Aspect 1, wherein the first material and the second material are the same material.
Aspect 3. The acoustic barrier assembly of Aspects 1 or 2, wherein the acoustic barrier assembly has a generally planar configuration.
Aspect 4. The acoustic barrier assembly of any one of Aspects 1-3, wherein an amount of the gas in the pocket is equal to an amount necessary to cause the gas to inflate the pocket when the acoustic barrier assembly is disposed onboard an aircraft while the aircraft is flying at a design altitude of the aircraft and to cause the gas to have a static pressure equal to an anticipated cabin pressure at the design altitude when the pocket is fully inflated.
Aspect 5. The acoustic barrier assembly of any one of Aspects 1-4, wherein the first wall and the second wall are coupled at a first periphery of the first wall and a second periphery of the second wall.
Aspect 6. The acoustic barrier assembly of any one of Aspects 1-5, wherein the first wall and the second wall are coupled together by one of an adhesive and a thermo-coupling.
Aspect 7. The acoustic barrier assembly of any one of Aspects 1-6, wherein the gas comprises helium.
Aspect 8. The acoustic barrier assembly of any one of Aspects 1-7, further comprising a mounting feature associated with one of the first wall, the second wall, and the valve, wherein the mounting feature is configured to permit the acoustic barrier to be coupled with another item.
Aspect 9. An acoustic barrier assembly comprising:
   a first wall comprising a first material, the first material being substantially gas impermeable;
   a second wall comprising a second material, the second material being substantially gas impermeable, the second wall disposed opposite the first wall, the second wall coupled with the first wall in a manner that forms a pocket between the first wall and the second wall;
   a body disposed in the pocket;
   a valve in fluid communication with the pocket, the valve configured to be selectively opened and closed to control a passage of fluid into and out of the pocket, the valve, when closed, cooperating with the first wall and the second wall to maintain the pocket in a fluid-tight configuration; and
   a gas disposed in the pocket, the gas having a first molecular weight lower than a second molecular weight of air.
Aspect 10. The acoustic barrier assembly of Aspect 9, wherein the body has a planar configuration.
Aspect 11. The acoustic barrier assembly of Aspect 10, wherein a first periphery of the body coincides with a second periphery of the pocket.
Aspect 12. The acoustic barrier assembly of any one of Aspects 9-11, wherein the body comprises a sound absorbing material.
Aspect 13. The acoustic barrier assembly of Aspect 12, wherein the body comprises an open cell foam material.
Aspect 14. The acoustic barrier assembly of Aspect 12, wherein the body comprises a closed cell foam material.
Aspect 15. The acoustic barrier assembly of any one of Aspects 9-14, wherein the body is coupled with one of the first wall and the second wall.
Aspect 16. The acoustic barrier assembly of any one of Aspects 9-15, wherein the body is coupled with the first wall and the second wall.
Aspect 17. The acoustic barrier assembly of any one of Aspects 9-16, wherein the body is configured to vibrationally isolate the first wall from the second wall.
Aspect 18. The acoustic barrier assembly of any one of Aspects 9-17, wherein the body comprises a fibrous material.
Aspect 19. A method of manufacturing a vehicle with an acoustic barrier assembly, the method comprising:
   obtaining the acoustic barrier assembly, the acoustic barrier assembly having a first wall and a second wall coupled together to form a pocket, the pocket being fluid-tight, and the pocket containing a gas having a first molecular weight lower than a second molecular weight of air;
   placing the acoustic barrier assembly in a position between two bodies on the vehicle; and
   affixing the acoustic barrier assembly in the position.
Aspect 20. The method of Aspect 19, wherein the vehicle comprises an aircraft and wherein the two bodies comprise opposing walls of a component of the aircraft.
Aspect 21. The method of Aspects 19 or 20, wherein the acoustic barrier assembly is in accordance with any one of Aspects 1-18.
Aspect 22. A vehicle comprising an acoustic barrier assembly, the acoustic barrier assembly having a first wall and a second wall coupled together to form a pocket, the pocket being fluid-tight, and the pocket containing a gas having a first molecular weight lower than a second molecular weight of air.
Aspect 23. The vehicle of Aspect 22, wherein the vehicle is an aircraft.
Aspect 24. The vehicle of Aspects 22 or 23, wherein the acoustic barrier assembly is in accordance with any one of Aspects 1-18.

## Claims

1. An acoustic barrier assembly comprising:
a first wall comprising a first material, the first material being substantially gas impermeable;
a second wall comprising a second material, the second material being substantially gas impermeable, the second wall disposed opposite the first wall, the second wall coupled with the first wall in a manner that forms a pocket between the first wall and the second wall;
a valve in fluid communication with the pocket, the valve configured to be selectively opened and closed to control a passage of fluid into and out of the pocket, the valve, when closed, cooperating with the first wall and the second wall to maintain the pocket in a fluid-tight configuration; and
a gas disposed in the pocket, the gas having a first molecular weight lower than a second molecular weight of air.

2. The acoustic barrier assembly of claim 1, wherein the first material and the second material are the same material.

3. The acoustic barrier assembly of claims 1 or 2, wherein the acoustic barrier assembly has a generally planar configuration.

4. The acoustic barrier assembly of any one of claims 1-3, wherein an amount of the gas in the pocket is equal to an amount necessary to cause the gas to inflate the pocket when the acoustic barrier assembly is disposed onboard an aircraft while the aircraft is flying at a design altitude of the aircraft and to cause the gas to have a static pressure equal to an anticipated cabin pressure at the design altitude when the pocket is fully inflated.

5. The acoustic barrier assembly of any one of claims 1-4, wherein the first wall and the second wall are coupled at a first periphery of the first wall and a second periphery of the second wall.

6. The acoustic barrier assembly of any one of claims 1-5, wherein the first wall and the second wall are coupled together by one of an adhesive and a thermo-coupling.

7. The acoustic barrier assembly of any one of claims 1-6, further comprising a mounting feature associated with one of the first wall, the second wall, and the valve, wherein the mounting feature is configured to permit the acoustic barrier to be coupled with another item.

8. An acoustic barrier assembly comprising:
a first wall comprising a first material, the first material being substantially gas impermeable;
a second wall comprising a second material, the second material being substantially gas impermeable, the second wall disposed opposite the first wall, the second wall coupled with the first wall in a manner that forms a pocket between the first wall and the second wall;
a body disposed in the pocket;
a valve in fluid communication with the pocket, the valve configured to be selectively opened and closed to control a passage of fluid into and out of the pocket, the valve, when closed, cooperating with the first wall and the second wall to maintain the pocket in a fluid-tight configuration; and
a gas disposed in the pocket, the gas having a first molecular weight lower than a second molecular weight of air.

9. The acoustic barrier assembly of claim 8, wherein the body has a planar configuration, wherein a first periphery of the body optionally coincides with a second periphery of the pocket.

10. The acoustic barrier assembly of claims 8 or 9, wherein the body comprises a sound absorbing material.

11. The acoustic barrier assembly of any one of claims 8-10, wherein the body is coupled with one of the first wall and the second wall.

12. The acoustic barrier assembly of any one of claims 8-11, wherein the body is coupled with the first wall and the second wall.

13. The acoustic barrier assembly of any one of claims 8-12, wherein the body is configured to vibrationally isolate the first wall from the second wall.

14. A method of manufacturing a vehicle with an acoustic barrier assembly, the method comprising:
obtaining the acoustic barrier assembly, the acoustic barrier assembly having a first wall and a second wall coupled together to form a pocket, the pocket being fluid-tight, and the pocket containing a gas having a first molecular weight lower than a second molecular weight of air;
placing the acoustic barrier assembly in a position between two bodies on the vehicle; and
affixing the acoustic barrier assembly in the position.

15. A vehicle comprising an acoustic barrier assembly in accordance with any one of claims 1-13.
